# EUROPEAN PATENT APPLICATION

(11) **EP 3 407 474 A1**
(43) Date of publication of application: **28.11.2018**
(21) Application number: 17461535.1
(22) Date of filing: 22.05.2017
(51) Int. Cl.: H02K 9/20, H02K 9/24

(54) **MULTIPLE MODE HYDROGEN RELEASE SYSTEM AND METHOD FOR A HYDROGEN COOLED GENERATOR**

(71) Applicant: General Electric Technology GmbH, 5400 Baden (CH)
(72) Inventor: BOGIATZIDIS, Ioannis, AG 5242 Birr (CH); HEGER, Armin, AG 5242 Birr (CH); SURMACEWICZ, Piotr, 53-609 Wroclaw (PL)
(74) Representative: Patpol Kancelaria Patentowa Sp. z o.o.

(57) **Abstract**

A hydrogen release system (20) for a hydrogen cooled generator (10), includes an unrestricted hydrogen exhaust path (21) connected to the hydrogen cooled generator and an exhaust port (40), and a restricted hydrogen exhaust path (22) connected to the hydrogen cooled generator and the exhaust port. The restricted hydrogen exhaust path (22) has a lower flow rate of hydrogen than the unrestricted hydrogen exhaust path (21). One or more valves (24) are located in each of the unrestricted hydrogen exhaust path and the restricted hydrogen exhaust path. The valves are in a normally closed condition, but are selectively activated to an open condition in the event hydrogen release is required.

## Description

### BACKGROUND OF THE INVENTION

The apparatus described herein relates generally to hydrogen cooled generators and, more specifically, to a dual or multiple mode hydrogen release system for hydrogen cooled generators.

Hydrogen (H₂) gas provides an effective cooling medium in turbine generators because hydrogen's low density and high heat transfer coefficient provide an economical way to increase power density and maintain high efficiency. In all hydrogen cooled generators a hydrogen release system is required to safely vent the hydrogen gas from the interior of the generator to a safe location in case of an identified hazardous event. In order to maintain the integrity of the generator internal parts, the rate of hydrogen release should be limited. In addition, if the hydrogen is not sufficiently vented in time, then the probability of ignition and catastrophic damage is increased.

### BRIEF DESCRIPTION OF THE INVENTION

In an aspect of the present invention, a hydrogen release system for a hydrogen cooled generator, includes an unrestricted hydrogen exhaust path connected to the hydrogen cooled generator and an exhaust port, and a restricted hydrogen exhaust path connected to the hydrogen cooled generator and the exhaust port. The restricted hydrogen exhaust path has a lower flow rate of hydrogen than the unrestricted hydrogen exhaust path. One or more valves are located in each of the unrestricted hydrogen exhaust path and the restricted hydrogen exhaust path. The valves are in a normally closed condition, but are selectively activated to an open condition in the event hydrogen release is required.

In another aspect of the present invention, a method for monitoring hydrogen maintenance process parameters for a hydrogen cooled generator. The method includes a monitoring step for monitoring process parameters. The process parameters are related to hydrogen maintenance of the hydrogen cooled generator. A determining step, based on the monitoring step, decides to open valves in one of an unrestricted hydrogen exhaust path and a restricted hydrogen exhaust path, or keep the valves in both the unrestricted hydrogen exhaust path and a restricted hydrogen exhaust path closed. The unrestricted hydrogen exhaust path is connected to the hydrogen cooled generator and an exhaust port, and the restricted hydrogen exhaust path is connected to the hydrogen cooled generator and an exhaust port. The restricted hydrogen exhaust path has a lower flow rate of hydrogen than the unrestricted hydrogen exhaust path. Similarly, the unrestricted hydrogen exhaust path has a higher flow rate of hydrogen than the restricted hydrogen exhaust path.

### BRIEF DESCRIPTION OF THE DRAWINGS

FIG. 1 illustrates a schematic view of a hydrogen cooled generator and a portion of the hydrogen release system, according to aspects described herein.
FIG. 2 illustrates a schematic view of the hydrogen release system, according to aspects described herein.
FIG. 3 illustrates a schematic view of the hydrogen release system, according to aspects described herein.
FIG. 4 illustrates a schematic view of the hydrogen release system, according to aspects described herein.
FIG. 5 is a flowchart for a method for monitoring process parameters of the generator and releasing hydrogen gas in case of specific events, according to aspects described herein.

### DETAILED DESCRIPTION OF THE INVENTION

One or more specific aspects/embodiments of the present invention will be described below. In an effort to provide a concise description of these aspects/embodiments, all features of an actual implementation may not be described in the specification. It should be appreciated that in the development of any such actual implementation, as in any engineering or design project, numerous implementation-specific decisions must be made to achieve the developers' specific goals, such as compliance with machine-related, system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," and "the" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments. Additionally, it should be understood that references to "one embodiment", "one aspect" or "an embodiment" or "an aspect" of the present invention are not intended to be interpreted as excluding the existence of additional embodiments or aspects that also incorporate the recited features.

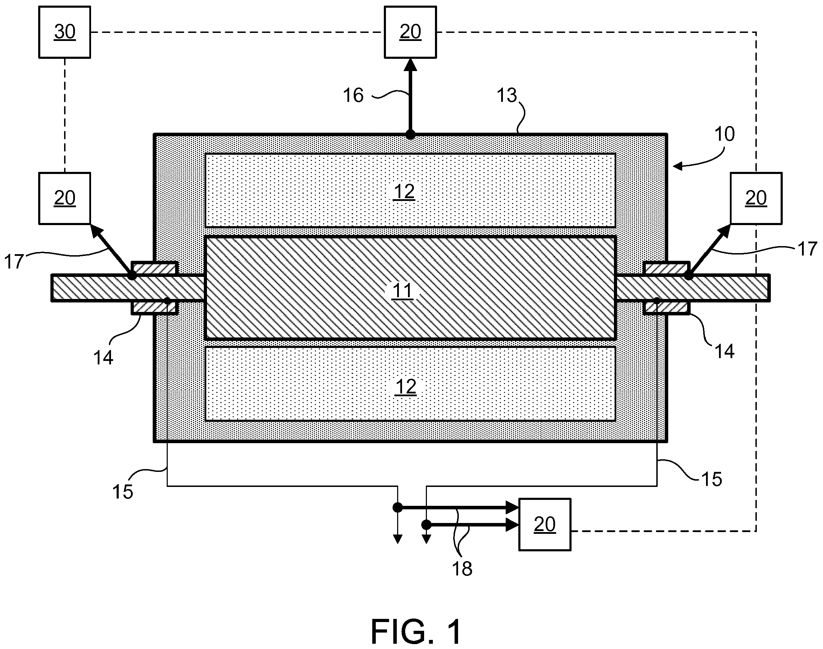

FIG. 1 illustrates a schematic view of a hydrogen cooled generator 10 and a portion of the hydrogen release system 20, according to aspects described herein. The hydrogen cooled generator includes a rotor 11, stator 12, housing 13, rotor shaft seals 14 and hydrogen (H₂) side seal oil return piping 15 at both generator ends. The seal oil return pipes 15 may drain seal oil from shaft seals 14 into H₂ side seal oil return tanks (separate at both generator ends) or into a seal oil drain enlargement tank (not shown). The generator 10 or hydrogen release system 20 includes a monitoring system 30 that monitors specific process parameters connected with maintenance of hydrogen sealing function or tightness for hydrogen cooled generators. Examples of process parameters are flow rate of hydrogen supplied to the generator for hydrogen daily losses make up and/or differential pressure between seal oil and hydrogen measured at the generator shaft seals (at one or both ends) and/or hydrogen pressure inside the generator and/or hydrogen leakage detectors located around the generator. Process parameters of the generator 10 are monitored and compared to predetermined desired thresholds. If hydrogen sealing function or tightness of the generator is lost, then the hydrogen gas should be vented or released from the generator through one or more hydrogen release paths to the exhaust port. As examples, a first path 16 releases hydrogen from one or more radially outer locations on the housing 13 of the generator, and/or a second path 17 from the shaft seals 14, and/or a third path 18 from the H₂ side seal oil return piping 15 at both generator ends.

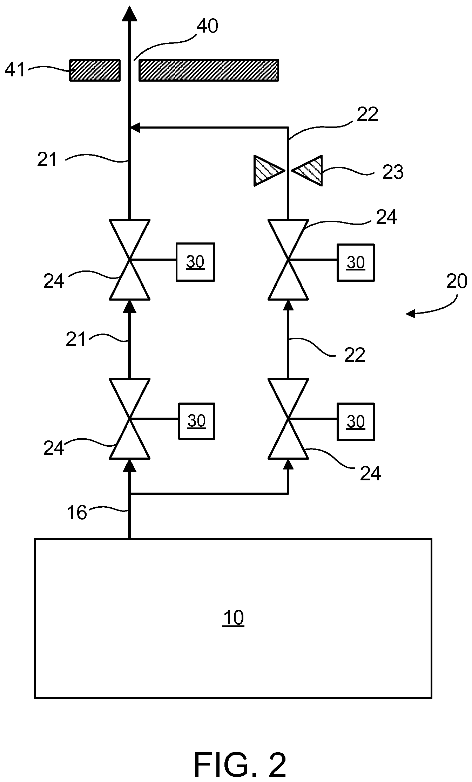

FIG. 2 illustrates a schematic view of the hydrogen release system 20, according to aspects described herein. In the example shown, the hydrogen release system 20 is connected to the generator 10 at one or more radially outer locations on the housing 13 of the generator. However, hydrogen release system 20 could be connected to multiple locations on or in the generator (including but not limited to the shaft seals, H₂ side seal oil return piping at both generator ends, or any other suitable location). The hydrogen release system 20 includes a first unrestricted hydrogen exhaust path 21 connected to the generator 10 and an exhaust port 40. The exhaust port may be located in a roof 41 of the structure enclosing the generator 10, or in any location that allows for safe exhaustion of hydrogen gas. The hydrogen release system 20 also includes a second restricted hydrogen exhaust path 22 connected to the generator 10 and an exhaust port 40, and this path includes a fixed exhaust orifice 23 that restricts or limits the hydrogen flow rate. The unrestricted hydrogen exhaust path 21 does not contain the controlled exhaust orifice, so the hydrogen flow rate is unrestricted. For example, if the unrestricted exhaust path 21 allows hydrogen flow rates of 100%, then the restricted exhaust path 22 limits or restricts the hydrogen flow rate to about 10% to about 50% of the hydrogen flow rate capable of passing through the unrestricted exhaust path 21. The restricted exhaust path 22 permits a slower release of hydrogen from the generator so that potential damage of internal parts (e.g. bar insulation) of the generator 10 resulting from the fast hydrogen pressure drop is avoided or prevented. A limited hydrogen flow rate for the exhaust path 22 is desired for events having a low to moderate risk of damage caused by potential hydrogen ignition.

The exhaust paths, 21 and 22 include one or more automatic valves 24, and the automatic valves 24 are connected to and controlled by dedicated monitoring system 30. In the event of a first hydrogen release event, which indicates a low to moderate risk of potential generator damage, the automatic valves 24 in the restricted hydrogen exhaust path 22 are activated to open and permit hydrogen flow. The hydrogen flow rate out of generator 10 is limited or restricted by fixed exhaust orifice 23, and fixed exhaust orifice 23 limits or reduces the hydrogen flow rate to about 10% to about 50% of the hydrogen flow rate capable of passing through unrestricted exhaust path 21. For example, if the unrestricted hydrogen flow rate through path 21 is 1,000 standard cubic feet per minute, then the restricted hydrogen flow rate through exhaust path 22 would be 100 to 500 cubic feet per minute, and this is due to the limited opening of fixed exhaust orifice 23. Various opening sizes of fixed exhaust orifice 23 may be selected to obtain a specific reduced hydrogen flow rate, based on the requirements of the individual generator 10. For example, if unrestricted path 21 is comprised of a 3 inch diameter pipe (having about 28 square inches in cross-sectional area), then the fixed exhaust orifice valve may have an opening of about 1 to about 2 inches in diameter (resulting in a cross-sectional area of about 3 to 14 square inches, respectively).

In the event of a second hydrogen release event, which indicates a high risk of potential generator damage, the automatic valves 24 in the unrestricted hydrogen exhaust path 21 are activated to open and permit unrestricted hydrogen flow. The hydrogen flow rate is 100% of the hydrogen flow rate capable of passing through unrestricted exhaust path 21, and is 2 to 10 times the hydrogen flow rate through restricted exhaust path 22. Following the previous non-limiting example above, the unrestricted hydrogen flow rate at release start may be about 20,000 standard cubic feet per minute for a generator pressurized nominally at an example of 60 psig. In cases of serious hazardous events when functional, personal and machine safety has higher priority, the hydrogen is released from generator 10 as fast as possible, so unrestricted hydrogen exhaust path 21 is chosen. In this case, potential damage in internal parts (e.g. bar insulation) of the generator 10 is acceptable, as the impact or cost for repairing insulation is deemed lower than catastrophic machine or personal damage/injury. In FIG. 2 and subsequent figures, it is to be understood that path 16 may actually comprise one or all of paths 16, 17 and 18.

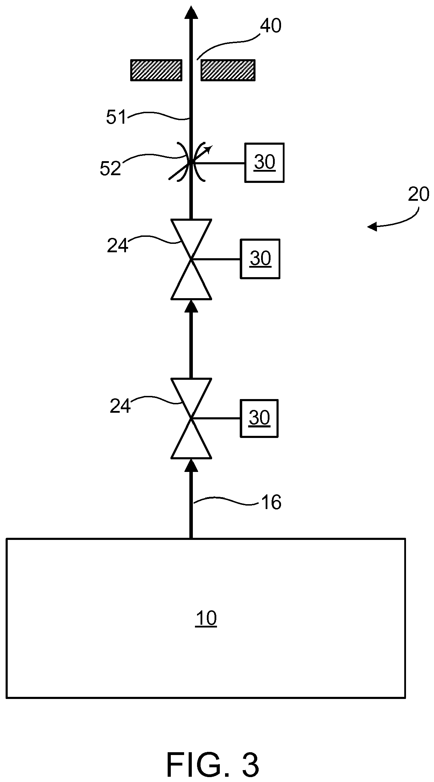

FIG. 3 illustrates a schematic view of the hydrogen release system 20, according to aspects described herein. In the example shown, the hydrogen release system 20 is connected to the generator 10 at one or more radially outer locations on the housing 13 of the generator. However, hydrogen release system 20 could be connected to multiple locations on or in the generator (including but not limited to the shaft seals, H₂ side seal oil return piping at both generator ends, or any other suitable location). In this aspect, the unrestricted flow path (equivalent to path 21 in FIG. 2) and restricted flow path (equivalent to path 22 in FIG. 2) are combined into one path 51, and both paths share a controlled exhaust orifice 52. The controlled exhaust orifice 52 has at least two settings. A first setting (for high risk of potential generator damage) provides an unrestricted hydrogen flow rate and is equivalent to path 21 in FIG. 2. The first setting maximizes the opening of the controlled exhaust orifice 52 to match the inner diameter of the pipe used for exhaust path 51. If the pipe used for path 51 has an inner diameter of 3 inches, then the controlled exhaust orifice is controlled to provide a 3 inch diameter opening. The monitoring system 30 may be used for controlling the operation of controlled exhaust orifice 52. A second setting (for low to moderate risk of potential generator damage) provides a restricted or limited hydrogen flow rate when compared to the first setting, and is equivalent to path 22 in FIG. 2. The second setting reduces the opening of the controlled exhaust orifice 52 so that it is smaller than the inner diameter of the pipe used for exhaust path 51. For example, if the pipe used for path 51 has an inner diameter of 3 inches, then the controlled exhaust orifice is controlled to provide a 1 to 2 inch diameter opening. In this manner, hydrogen release from the generator 10 is reduced and limited so that damage on internal parts of the generator 10 does not occur. The functioning of valves 24 are the same for the first and second settings as that described in conjunction with FIG. 2, which means that the valves 24 are either open or closed. If the generator hydrogen sealing function/tightness are not disrupted, then valves 24 are closed, however if the predetermined thresholds are exceeded, then both valves 24 are opened. In another embodiment an adjustable flow control valve could be used, if its function had a similar effect to the controlled exhaust orifice 52, to reliably throttle or control the flow rates in path 51.

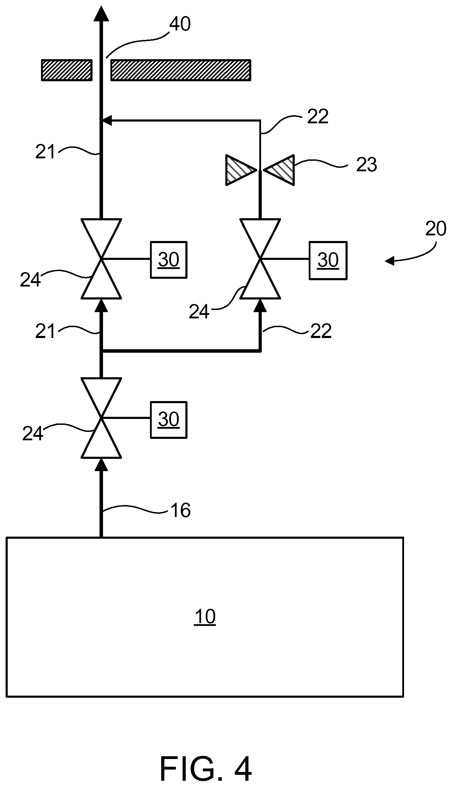

FIG. 4 illustrates a schematic view of the hydrogen release system 20, according to aspects described herein. In the example shown, the hydrogen release system 20 is connected to the generator at one or more radially outer locations on the housing 13 of the generator. However, hydrogen release system 20 could be connected to multiple locations on or in the generator (including but not limited to the shaft seals, H₂ side seal oil return piping at both generator ends, or any other suitable location). The hydrogen release system 20 includes a first unrestricted hydrogen exhaust path 21 connected to the generator 10 and an exhaust port 40. A second restricted hydrogen exhaust path 22 is connected to the generator 10 and an exhaust port 40, and this path includes a fixed exhaust orifice 23 that restricts or limits the hydrogen flow rate. In contrast, the hydrogen flow rate is unrestricted in the unrestricted hydrogen exhaust path 21. For example, if the unrestricted exhaust path 21 allows hydrogen flow rates of 100%, then the restricted exhaust path 22 limits or restricts the hydrogen flow rate to about 10% to about 50%. The restricted exhaust path 22 permits a slower release of hydrogen from the generator so that damage on internal parts of the generator 10 is avoided or prevented. A limited hydrogen flow rate for the exhaust path 22 is desired for events having a moderate risk of damage caused by potential hydrogen ignition. The configuration shown in FIG. 4 differs from that shown in FIG. 2 in that the exhaust path 16 (which may alternatively or additionally include paths 17 and 18) is connected to a single valve 24, which is controlled by monitoring system 30. Downstream of the first valve 24 the two paths split into unrestricted hydrogen exhaust path 21 and restricted hydrogen exhaust path 22.

Each exhaust path, 21 and 22 include a second series-connected valve 24, and the valves 24 are connected to and controlled by monitoring system 30. In the event of a first hydrogen release event, which indicates a low to moderate risk of potential generator damage, the first common/shared valve 24 and second valve 24 in the restricted hydrogen exhaust path 22 are activated to open and permit hydrogen flow. The hydrogen flow rate out of generator 10 is limited or restricted by fixed exhaust orifice 23, and orifice 23 limits or reduces the hydrogen flow rate to about 10% to about 50% of the hydrogen flow rate capable of passing through unrestricted exhaust path 21. In the event of a second hydrogen release event, which indicates a high risk of potential generator damage, the first common/shared valve 24 and second valve 24 in the unrestricted hydrogen exhaust path 21 are activated to open and permit unrestricted hydrogen flow. The hydrogen flow rate is 100% of the hydrogen flow rate capable of passing through unrestricted exhaust path 21, and is 2 to 10 times the hydrogen flow rate through restricted exhaust path 22.

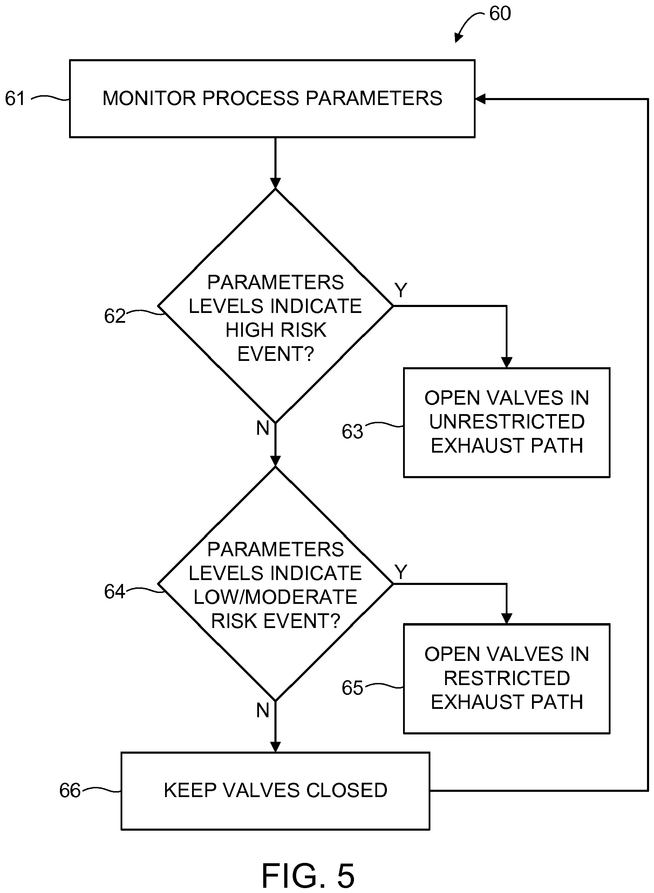

FIG. 5 is a flowchart for a method 60 for monitoring hydrogen maintenance process parameters in a hydrogen cooled generator and releasing hydrogen gas in case of specific events, according to aspects described herein. In step 61 process parameters in the generator 10 are monitored by a monitoring system 30. In step 62 a determination is made if the process parameters indicate a high risk event. If the answer is YES, then the valves 24 are opened (step 63) in the unrestricted hydrogen exhaust path 21. This provides a high volume flow path to quickly release hydrogen from the generator and vent it to a safe location. If the answer is NO, then the method proceeds to step 64.

In step 64 a determination is made if the process parameters indicate a low to moderate risk event. If the answer is YES, then the valves 24 are opened (step 65) in the restricted hydrogen exhaust path 22. This provides a low volume flow path to slowly release hydrogen from the generator and vent it to a safe location, while protecting the integrity of internal parts (e.g. generator insulation) of the generator 10. If the answer is NO, then the method proceeds to step 66 and the valves 24 are kept closed, and process parameter monitoring continues.

A technical effect provided by the hydrogen release system described herein solves the problem of potential damage of internal parts of the generator when such damage was not warranted. The hydrogen release system provides a dual mode hydrogen release system that enables a restricted hydrogen flow rate release (without damage inside the generator) for events having a low to moderate risk of potential generator damage, and an unrestricted hydrogen flow rate release (with probable generator equipment damage) for events having a high risk of potential generator damage or personal injury. The restricted hydrogen flow rate is lower than the unrestricted hydrogen flow rate. Further, this dual mode system may be used in parallel with the existing manual hydrogen release system currently found on known generators.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise. The terms "about" and "approximately" as applied to a particular value of a range applies to both values, and unless otherwise dependent on the precision of the instrument measuring the value, may indicate +/- 10% of the stated value(s).

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A hydrogen release system (20) for a hydrogen cooled generator (10), the system comprising:
an unrestricted hydrogen exhaust path (21) connected to the hydrogen cooled generator and an exhaust port (40);
a restricted hydrogen exhaust path (22) connected to the hydrogen cooled generator and the exhaust port, the restricted hydrogen exhaust path (22) having a lower flow rate of hydrogen than the unrestricted hydrogen exhaust path (21);
one or more valves (24) in each of the unrestricted hydrogen exhaust path (21) and the restricted hydrogen exhaust path (22), the valves (24) being in a normally closed condition but are selectively activated to an open condition in the event hydrogen release is required.

2. The hydrogen release system of claim 1, the valves (24) in the restricted hydrogen exhaust path (22) being activated to open when a first hydrogen release event is determined, the first hydrogen release event comprising a moderate risk of potential generator damage; and
wherein the flow rate of exhausted hydrogen is limited to prevent damage to generator insulation.

3. The hydrogen release system of claim 2, the restricted hydrogen exhaust path (22) having a fixed exhaust orifice (23) that reduces the flow rate of hydrogen by about 10% to about 50% when compared to the flow rate of the unrestricted hydrogen exhaust path (21).

4. The hydrogen release system of claim 1, the valves (24) in the unrestricted hydrogen exhaust path (21) being activated to open when a second hydrogen release event is determined, the second hydrogen release event comprising a high risk of potential generator damage; and
wherein the flow rate of exhausted hydrogen is not limited.

5. The hydrogen release system of claim 1, the unrestricted hydrogen exhaust path (21) and the restricted hydrogen exhaust path (22) connected to one or more radially outer locations on a housing of the hydrogen cooled generator.

6. The hydrogen release system of claim 1, the unrestricted hydrogen exhaust path (21) and the restricted hydrogen exhaust path (22) connected to shaft seals (14) of the hydrogen cooled generator.

7. The hydrogen release system of claim 1, the unrestricted hydrogen exhaust path (21) and the restricted hydrogen exhaust path (22) connected to hydrogen side seal oil return piping (15) at both generator ends of the hydrogen cooled generator.

8. The hydrogen release system of claim 1, the unrestricted hydrogen exhaust path (21) and the restricted hydrogen exhaust path (22) sharing a controlled exhaust orifice (52), the controlled exhaust orifice (52) having a first setting that provides an unrestricted hydrogen flow rate and a second setting that provides a restricted or limited hydrogen flow rate when compared to the first setting.

9. The hydrogen release system of claim 1, the unrestricted hydrogen exhaust path (21) and the restricted hydrogen exhaust path (22) sharing an adjustable flow control valve, the adjustable flow control valve having a first setting that provides an unrestricted hydrogen flow rate and a second setting that provides a restricted or limited hydrogen flow rate when compared to the first setting.

10. The hydrogen release system of claim 1, both the unrestricted hydrogen exhaust path (21) and the restricted hydrogen exhaust path (22) having two valves (24) in series, the two valves providing redundancy for a predetermined safety integrity level.

11. The hydrogen release system of claim 1, each of the one or more valves (24) connected to and controlled by a monitoring system (30), the monitoring system monitoring hydrogen maintenance process parameters of the hydrogen cooled generator.

12. The hydrogen release system of claim 12, the process parameters further comprising at least one of:
a flow rate of hydrogen supplied to the generator for hydrogen daily losses make up;
a differential pressure between seal oil and hydrogen measured at generator shaft seals;
a hydrogen pressure inside the generator; or
a hydrogen leakage amount obtained from detectors located around the generator.

13. A method (60) for monitoring hydrogen maintenance process parameters for a hydrogen cooled generator (10), the method comprising:
monitoring (61) process parameters, the process parameters related to hydrogen maintenance of the hydrogen cooled generator;
determining (62, 64), based on the monitoring step, to open valves (24) in one of an unrestricted hydrogen exhaust path (21) and a restricted hydrogen exhaust path (22), or keep the valves in both the unrestricted hydrogen exhaust path and a restricted hydrogen exhaust path closed, the unrestricted hydrogen exhaust path connected to the hydrogen cooled generator (10) and an exhaust port (40), and the restricted hydrogen exhaust path connected to the hydrogen cooled generator and an exhaust port; and
wherein the restricted hydrogen exhaust path (22) has a lower flow rate of hydrogen than the unrestricted hydrogen exhaust path (21).

14. The method of claim 13, the process parameters comprising at least one of:
a flow rate of hydrogen supplied to the generator for hydrogen daily losses make up;
a differential pressure between seal oil and hydrogen measured at generator shaft seals;
a hydrogen pressure inside the generator; or
a hydrogen leakage amount obtained from detectors located around the generator.

15. The method of claim 13, the determining step further comprising:
determining if the process parameters indicate a high risk event, and if yes, then opening the valves in the unrestricted exhaust path, or
determining if the process parameters indicate a low to moderate risk event, and if yes, then opening the valves in the restricted exhaust path, and wherein a flow rate of exhausted hydrogen is limited to prevent damage to generator insulation.
